# EUROPEAN PATENT APPLICATION

(11) **EP 2 166 520 A1**
(43) Date of publication of application: **24.03.2010**
(21) Application number: 08777186.1
(22) Date of filing: 13.06.2008
(51) Int. Cl.: G08B 17/107, G01N 21/53

(54) **SMOKE SENSOR**

(30) Priority: 18.06.2007 JP 2007160433; 18.06.2007 JP 2007160071; 18.06.2007 JP 2007159853
(71) Applicant: Panasonic Electric Works Co., Ltd, Kadoma-shi Osaka 571-8686 (JP)
(72) Inventor: SAKAMOTO, Koji, Kadoma-shi Osaka 571-8686 (JP); SHIMADA, Yoshitake, Kadoma-shi Osaka 571-8686 (JP); KOMATSU, Mikio, Kadoma-shi Osaka 571-8686 (JP); OKA, Shoichi, Kadoma-shi Osaka 571-8686 (JP)
(74) Representative: Sajda, Wolf E.
(86) International application number: PCT/JP2008/060825
(87) International publication number: WO 2008/156030

(57) **Abstract**

A smoke sensor having a smoke sensing chamber around which a plurality of labyrinth walls are formed in which a light emitting portion and a light receiving portion are provided in such a manner that the light receiving portion is disposed at a place where light from the light emitting portion is not directly received, thereby constituting a smoke sensing zone and a smoke inlet is formed in the labyrinth walls, the detecting sensor being adapted to discriminate a fire by detecting light scattered by smoke which enters the smoke sensing chamber through the smoke inlet is provided. The labyrinth walls have a bent portion by bending its portion near the smoke sensing chamber, and a smoke guide end directing toward the smoke sensing zone formed at its end of the smoke sensing zone side from the bent portion. At least one of the labyrinth walls provided in an area facing the light receiving portion has an outside light interrupting end whose end directing toward the outward of the smoke sensing chamber is formed as a fan-like shape whose end is broaden.

## Description

### TECHNICAL FIELD

The present invention relates to a smoke sensor for detecting fire in response to smoke and more particularly to a photoelectric smoke sensor which detects a fire by emitting light from a light emitting portion to the smoke entered in a smoke sensing zone and by receiving the light scattered by smoke particles in a light receiving portion.

### BACKGROUND ART

According to a conventional smoke sensor, a smoke sensing chamber provided with a plurality of labyrinth walls therearound has a light emitting portion and a light receiving portion in which the light emitted from the light emitting portion is not directly received, thereby constituting a smoke sensing zone. Such a smoke sensor is well known that the scattering light by the smoke entered into the smoke sensing zone through a smoke inlet formed in the gap between the labyrinth walls is received in the light receiving portion and a fire alarm signal is output when the received light signal exceeds a threshold value.

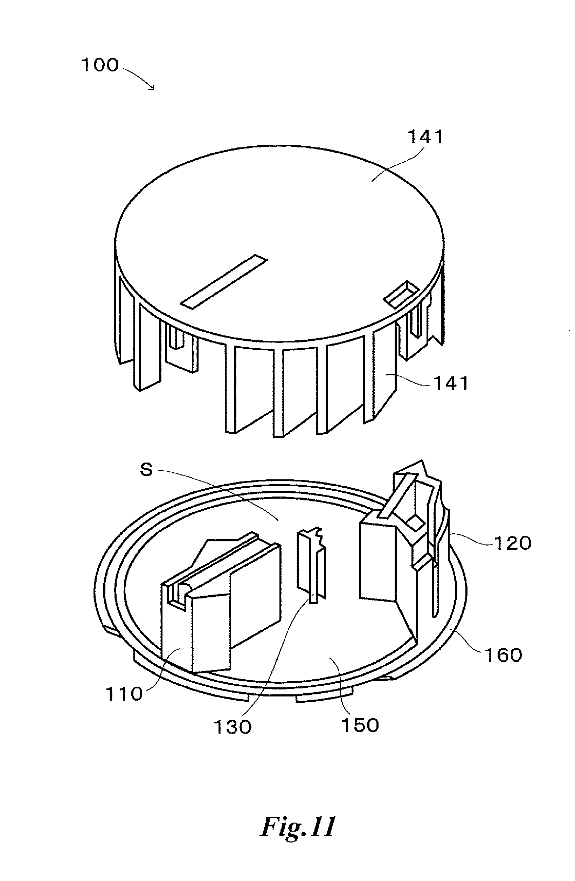

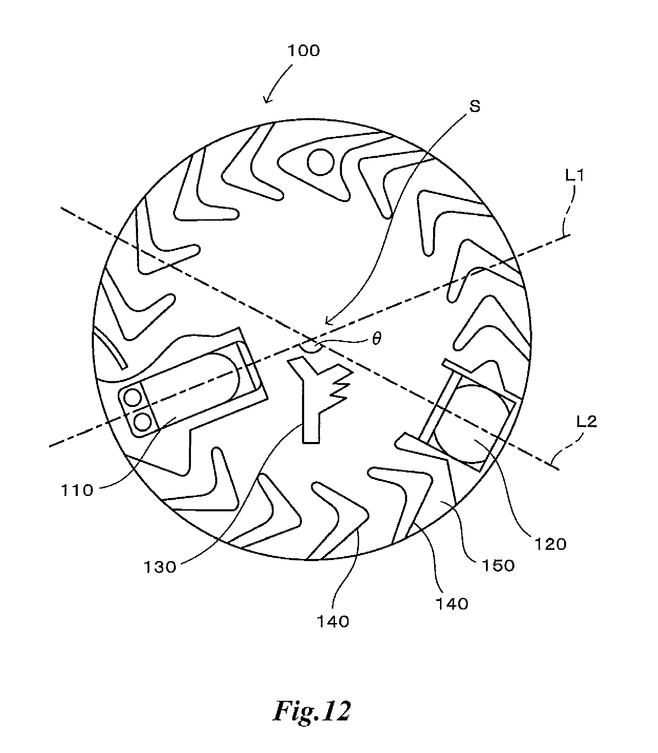

The Patent Documents 1 and 2 disclose such a smoke sensor. Fig. 11 illustrates a plan view showing the internal structure of the smoke sensing chamber of the smoke sensor described in the Patent Document 1. Fig. 12 is an exploded perspective view showing the internal structure of the smoke sensing chamber of the smoke sensor of Fig. 11.

The smoke sensor 100 in Fig. 11 has a light emitting portion 110 provided with a light emitting element such as an LED and a light receiving portion 120 provided with a light receiving element. The light emitting portion 110 and the light receiving portion 120 are disposed in such a manner that their optical axes L1, L2 intersect at an angle θ of about 130° on the same horizontal plane, respectively. Accordingly, the light emitting element 110 irradiates light on the smoke particles entered in the smoke sensing zone S substantially at the center of the smoke sensing chamber.
Then, the light receiving portion 120 receives the scattering light scattered in the smoke sensing zone S and converts the received light amount into the received light signal. The smoke sensor 100 outputs a fire alarm signal to announce a fire when the received light signal from the light receiving portion 120 exceeds a threshold.

The reference numeral 130 is a light shielding wall (support for light shielding). Its dimension and position are determined so as not to be an obstacle of irradiation from the light emitting portion 110 and not to directly enter the light from the light emitting portion 110 to the light receiving portion 120. The circumference of the smoke sensing chamber is provided with a plurality of labyrinth walls 140 formed like a letter "L" so as to allow smoke enter and to prevent outside light from entering. The gap between the labyrinth walls 140 constitutes a smoke inlet. The light other than the scattering light caused by smoke is effectively prevented from entering into the light receiving portion 120 by means of the light shielding wall 130 and the labyrinth walls 140.

According to such a constructed smoke sensor 100, as shown in Fig. 12, an optical base 150 having the light emitting portion 110 and the light receiving portion 120 and a labyrinth cylindrical body 141 formed with a plurality of labyrinth walls 140 are combined to constitute the smoke sensing chamber. The reference numeral 160 is a circuit board mounting the light emitting element and the light receiving element. When the optical base 150 and the labyrinth cylindrical body 141 are assembled, the lower end of the labyrinth wall 140 comes into contact with the inner bottom of the optical base 150 and the labyrinth wall 140 forms a partition wall.

Accordingly, the gap between the labyrinth walls 140 is formed as a smoke inlet and a smoke flow path and the smoke entered from the smoke inlet passes through the smoke flow path to be collected in the smoke sensing zone S. The labyrinth wall 140 has functions of guiding the smoke entered from the smoke inlet to the smoke sensing zone S and of preventing a disturbance light from arriving at the smoke sensing zone S by means of the angled shape. Thus according to a conventional smoke sensor 100, the smoke inlet and the smoke flow path are constituted with a plurality of labyrinth walls 140 and smoke is designed to be effectively entered in the smoke sensing zone S.

The Patent Document 2 describes a fire sensor in which a light shielding wall is provided between a light emitting portion and a labyrinth wall provided forward of the light axis direction of a light receiving portion (refer to Fig. 1 in the Patent Document 2). According to the Patent Document 2, the outgoing light from the light emitting portion is prevented from entering into the light receiving portion by reflected by the labyrinth wall, thereby eliminating the influence of stray light reflected by the labyrinth wall positioned forward of the light axis direction of the light receiving portion.
Patent Document 1 : JP-H09-231 485-A
Patent Document 2 : JP-2002-352 346-A

### DISCLOSURE OF INVENTION

The sensors of the Patent Documents 1 and 2 are designed to prevent the light other than the scattering light by smoke from entering into the light receiving portion and to improve the detecting accuracy of the smoke sensor, however, they are not designed to guide the smoke flown into the smoke sensing chamber to the smoke sensing zone. In addition to the above-mentioned light control in the light receiving portion, for enhancing the detection accuracy of the smoke sensor, it is necessary to prevent smoke from flowing into the area which does not relate to smoke detection and to smoothly guide the smoke flown in the smoke sensing chamber into the smoke sensing zone to expedite the smoke response ability.

According to the labyrinth wall of the above-mentioned conventional smoke sensor, its middle portion is angled like the letter "L" with a sharp angle in a plan view. The area of the end face of the labyrinth wall facing the outer circumference of the smoke sensing chamber becomes large and the smoke entered from the outer circumferential side of the smoke sensing chamber hardly arrives at the smoke sensing zone.
When such a smoke sensor having the structure based on the labyrinth wall includes a speaker for alarming a fire adjacent to the smoke sensing chamber, the smoke inlet is further arrowed. Therefore, the inflow ability of smoke into the smoke sensing zone is further deteriorated, thereby remarkably reducing the smoke detecting ability of the smoke sensor.

Further according to the above-mentioned conventional smoke sensor, the light emitting portion and the light receiving portion are provided in such a manner that their optical axes have a predetermined angle in a plan view. Therefore, in the area at short arc side held between the light emitting portion and the light receiving portion in a plan view, the structure of the light emitting portion and the light receiving portion interferes inflow of smoke, so that smoke is apt to stay without flowing and the smoke density therein may become lower than that in the other area at a first stage of smoke inflow.
The gap between the labyrinth walls has width in up and down, thereby partially forming an area with an extremely diluted smoke density. Specifically when a circumferential wall is provided for the optical base, smoke does not flow into the inner bottom surface of the smoke flow path held with the labyrinth walls because of the circumferential wall of the optical base, so that the smoke density therein becomes very low.

According to the smoke sensor including a speaker adjacent to the smoke sensing chamber, the vibration of speaker alarming a fire makes the air with low smoke density staying in the area along a short arc flow into the smoke sensing zone, thereby remarkably reducing the smoke density in the smoke sensing zone. In such a case, the smoke sensor including a speaker might not become a detected condition of smoke even if it once detects smoke. Thus, a conventional smoke sensor having a speaker may adversely affect the smoke detection accuracy by the mutual affect of the air with low smoke density in the area held between the light emitting portion and the light receiving portion and the vibration of the speaker.

### MEANS TO SOLVE THE PROBLEM

The object of the present invention is to provide a smoke sensor which improves inflow ability of smoke entered from the outer circumference side of the smoke sensing chamber and blocks off the outside light entering from the outer circumference side of the smoke sensing chamber in view of the above-mentioned problems. Further, the present invention has an object to provide a smoke sensor which can smoothly guide smoke in the smoke sensing zone. Still further, the object of the present invention is to provide a smoke sensor which reduces an area with low smoke density as much as possible and improves the smoke detection accuracy.

In order to achieve the above-mentioned objects, according to the present invention, a smoke sensor has a smoke sensing chamber around which a plurality of labyrinth walls are formed in which a light emitting portion and a light receiving portion are provided in such a manner that the light receiving portion is disposed at a place where light from the light emitting portion is not directly received, thereby constituting a smoke sensing zone and a smoke inlet is formed in the labyrinth walls, the detecting sensor being adapted to discriminate a fire by detecting light scattered by smoke which enters the smoke sensing chamber through the smoke inlet.
The labyrinth walls have a bent portion by bending its portion near the smoke sensing chamber, and a smoke guide end directing toward the smoke sensing zone formed at its end of the smoke sensing zone side from the bent portion. At least one of the labyrinth walls provided in an area facing the light receiving portion has an outside light interrupting end whose end directing toward the outward of the smoke sensing chamber is formed as a fan-like shape whose end is broadened.

In the smoke sensor, at least one of the labyrinth walls whose smoke guide end faces to the light emitting portion may have a smoke guide end of tapered shape. Accordingly, when the light emitted from the light emitting portion is incident to the smoke guide end, the light is reflected diffusely and is prevented from directly reaching the light receiving portion.

The labyrinth wall may further have at its inner side of the bent portion a projection for interrupting and reflecting outside light. When the outside light enters from the gap formed with the labyrinth walls, it is not reflected on the end face of the labyrinth wall into the smoke sensing zone and it is reflected outward of the smoke sensing chamber to effectively prevent the outside light from entering into the smoke sensing zone.
Specifically, when the projection for blocking and reflecting outside light is provided in the bent portion of the labyrinth wall provided so as to face the light receiving portion, the outside light entered from the gap of the labyrinth walls facing the light receiving portion is reflected by the projection for blocking and reflecting outside light and does not reach the light receiving portion.

According to the present invention, a smoke sensor has a smoke sensing chamber around which a plurality of labyrinth walls are formed in which a light emitting portion and a light receiving portion are provided in such a manner that the light receiving portion is disposed at a place where light from the light emitting portion is not directly received, thereby constituting a smoke sensing zone and a smoke inlet is formed in the labyrinth walls, the detecting sensor being adapted to discriminate a fire by detecting light scattered by smoke which enters the smoke sensing chamber through the smoke inlet.
The smoke sensor comprises an optical base in which the light emitting portion and the light receiving portion are provided, labyrinth walls provided in the optical base by which the light emitting portion and the light receiving portion are surrounded, a light shielding wall disposed around the center in the smoke sensing chamber, by which light from the light emitting portion directly to the light receiving portion is shielded, and a partition member connecting the ends of the labyrinth walls directing toward the smoke sensing zone area with the end of the light shielding wall correspondingly, the labyrinth walls being disposed between the light emitting portion and the light receiving portion.

In the smoke sensor, a raised bottom which constitutes a closed zone may be further provided in an area between the light emitting portion and the light receiving portions. Therefore, the smoke which is going to stay in the area held with the light emitting portion and the light receiving portion has no where to go and is apt to more smoothly flow into the smoke sensing zone. In addition, the raised bottom is formed to make the volume in the smoke sensing chamber small, thereby increasing the smoke density flown in the smoke sensing chamber.

A raised bottom which constitutes a closed zone may be further provided in areas adjacent to the light emitting portion and to the light receiving portion, respectively, the areas being opposite to an area between the light emitting portion and the light receiving portion. Therefore, the smoke which is apt to stay in the area adjacent to the light emitting portion and the light receiving portion easily flows into the smoke sensing zone. By the multiplier effect of the raised bottom and the partition member, the smoke sensor can achieve rapid response to smoke and high accuracy of smoke detection.

A smoke sensor of the present invention has a smoke sensing chamber around which a plurality of labyrinth walls are formed in which a light emitting portion and a light receiving portion are provided in such a manner that the light receiving portion is disposed at a place where light from the light emitting portion is not directly received, thereby constituting a smoke sensing zone and a smoke inlet is formed in the labyrinth walls, the detecting sensor being adapted to discriminate a fire by detecting light scattered by smoke which enters the smoke sensing chamber through the smoke inlet.
The smoke sensor comprises an optical base in which the light emitting portion and the light receiving portion are provided, and labyrinth walls protruding from the optical base so as to surround the light emitting portion and the light receiving portion. The optical base has a closed zone constituted by a raised bottom where smoke is prevented from entering in an area not including the smoke sensing zone but including an area between the light emitting portion and the light receiving portion and the labyrinth walls are provided such that they are extended from the raised bottom up to the upper end of the smoke sensing chamber, and the labyrinth walls are extended from the bottom of the optical base up to the upper end of the smoke sensing chamber in an area including the smoke sensing zone except the raised bottom.

The smoke sensor may further comprise a speaker, disposed adjacent to the smoke sensing chamber, for fire alarming, and an isolation wall with an air vent which communicates a space where the speaker is disposed with the smoke sensing chamber. Therefore, the speaker can be adequately vibrated by the space for providing the speaker and the space in the smoke detection chamber communicating therewith. By the vibration of these spaces, air flows into the smoke sensing chamber through the air vent to diffuse the air and the smoke in the smoke sensing chamber and air with low smoke density is prevented from flowing into the smoke sensing zone in combination with the structure of the raised bottom.

The raised bottom may be substantially same in height as a boundary of the circumferential wall. Therefore, the height of the closed space becomes substantially same as the lower end of the smoke inlet and there causes no area with low smoke density where smoke is not flown. Further, when the height of the raised bottom and that of the circumferential wall of the optical base are substantially same, the smoke flown from the smoke inlet can be smoothly guided to the smoke sensing zone along the raised bottom.

### EFFECT OF THE INVENTION

According to the smoke sensor of the present invention, a part of the labyrinth wall facing the inside of the smoke sensing chamber is angled, so that the outside light entering from the outside of the smoke sensing chamber is blocked off so as not to reach the smoke sensing chamber by the labyrinth wall. The tip end of the labyrinth wall is directed to the smoke sensing zone as the smoke guide end, so that the smoke flown through the gaps between the plurality of labyrinth walls can be smoothly guided into the smoke sensing chamber.
Then, the labyrinth wall facing the light receiving portion further has the outside light blocking end of which side directing outside of the smoke sensing chamber is formed to be spread toward the bottom, thereby specifically reducing the outside light entered from the direction facing the light receiving element, which is apt to be an obstacle for detecting smoke.

Further according to the smoke sensor of the present invention, the smoke guide wall constituted with the partition member connecting the end directing the smoke sensing zone of the labyrinth wall and the facing end of the light shielding wall can smoothly guide the smoke flown through the smoke inlet between the labyrinth walls in the smoke sensing zone. Specifically, the partition member connects a part of the labyrinth wall which is held with the light emitting portion and the light receiving wall and which has inferior smoke fluidity and the light shielding wall, thereby preventing smoke retention. Therefore, the smoke sensor can obtain rapid response to smoke and a superior detection accuracy.

Still further according to the smoke sensor of the present invention, the raised bottom on which the labyrinth wall is erected is formed in an area held with the light emitting portion and the light receiving portion in the smoke sensing chamber, thereby preventing an area with low smoke density. Therefore, when the speaker is vibrated, the reduction of smoke density in the smoke sensing zone, which is caused by the air with low smoke density, can be refrained.

### BRIEF DESCRIPTION OF THE DRAWINGS

- Fig. 1: is a perspective view illustrating the internal structure of the smoke sensing chamber (optical base) of the smoke sensor of an Embodiment 1.
- Fig. 2: is a plan view illustrating the internal structure of the smoke sensing chamber of the smoke sensor of the Embodiment 1 (plan view seen from the lower side when it is fitted on a ceiling).
- Fig. 3: is a fragmental sectional view along the line A-A in Fig. 2.
- Fig. 4A: is an explanatory view of a projection for blocking and reflecting outside light of the labyrinth wall.
- Fig. 4B: is an explanatory view of a projection for blocking and reflecting outside light of the labyrinth wall.
- Fig. 5: is an exploded perspective view of the smoke sensor of the present invention.
- Fig. 6: is a plan view illustrating the internal structure of the smoke sensing chamber of the smoke sensor of an Embodiment 2.
- Fig. 7A: is a plan view illustrating the internal structure of the smoke sensing chamber of the smoke sensor of an Embodiment 3.
- Fig. 7B: is a fragmental sectional view along the line X-X in Fig. 7A.
- Fig. 8: is a plan view illustrating the internal structure of the smoke sensing chamber of the smoke sensor of a modification of the Embodiment 3.
- Fig. 9A: is a plan view illustrating the internal structure of the smoke sensing chamber of the smoke sensor of an Embodiment 4.
- Fig. 9B: is a fragmental sectional view along the line A-A in Fig. 9A.
- Fig. 10: is a diagrammatical view illustrating the relation of the height of the smoke sensing zone, the optical axis of the light receiving portion and the circumferential wall of the optical base and is a diagrammatical vertical sectional view along the line B-B in Fig. 9A.
- Fig. 11: is a plan view illustrating the internal structure of the smoke sensing chamber of a prior smoke sensor.
- Fig. 12: is an exploded perspective view illustrating the internal structure of the smoke sensing chamber of a prior smoke sensor.

### EXPLANATION OF REFERENCE SIGNS

- 1: optical base
- 3: insect deterring cover
- 4: speaker
- 10: light emitting unit (light emitting portion)
- 11: light receiving unit (light receiving portion)
- 12: labyrinth wall
- 12a: smoke inlet (gap)
- 12b: bent portion
- 12c: smoke guide end
- 12d: outside light shielding end
- 12e: projection for blocking and reflecting outside light
- 12f: smoke inflow path
- 13: bottom plate
- 13a: raised bottom
- 13x: area along short arc
- 14: circumferential wall
- 15: smoke sensing zone
- 18: light shielding wall (light shielding column)
- 19: partition member (smoke guide wall)
- 35: isolation wall
- 36: air vent
- 100: smoke sensor
- 101: smoke sensing chamber
- L: light emitting element
- PD: light receiving element
- L1: optical axis of light emitting unit
- L2: optical axis of light receiving unit

### BEST MODE FOR CARRYING OUT THE INVENTION

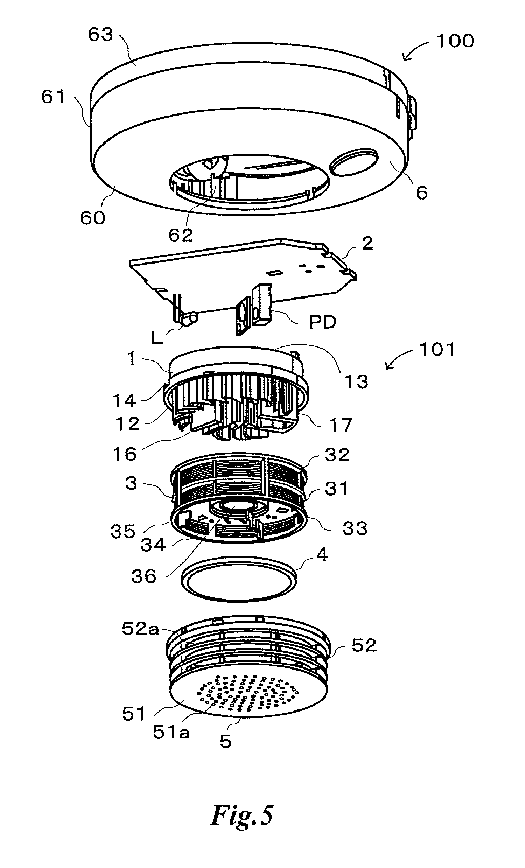

The best mode for carrying out the present invention is explained referring to the drawings. At first, the entire structure of the smoke sensor which is common to each embodiment is explained referring to Fig. 5. Fig. 5 is an exploded perspective view of the smoke sensor of the present invention.

### Structure of Smoke Detection Unit

As shown in Fig. 5, the smoke sensor 100 comprises a sensor body 6 to be fitted on a ceiling and the like; a circuit board 2 to be mounted with a circuit member like a light emitting/receiving circuit or a microcomputer (not shown) for outputting a fire alarm signal when exceeding a predetermined threshold while observing the optical elements like a light emitting diode L and a photo diode PD and a light receiving signal; an optical base 1 having a smoke sensing chamber 101, an optical member constituting a light emitting unit 10 and a light receiving unit 11, and a labyrinth wall 12; an insect deterring cover 3 for preventing flying insects or the like from entering the smoke sensing chamber 101; a plate-like speaker 4 for alarming a warning sound when detecting a fire; and a protecting cover 5. In the exploded perspective view in Fig. 5, the upper part of the sheet is fitted to a ceiling.

The sensor body 6 has a main part 60 like a disc, a side wall 61 projecting upwardly from the outer circumference of the main part 60, and a base 63. A circular opening 62 is formed around the center of the bottom of the main part 60. The circuit board 2 is contained in the sensor body 6. The protecting cover 5 including the optical base 1, the insect deterring cover 3 and the speaker 4 is assembled so as to be projecting from the opening 62. Thus integrally assembled smoke sensor 100 is mounted on the ceiling and the like.

The circuit board 2 is fixed to the optical base 1 and the optical base 1 is integrally combined by the protecting cover 5 together with the insect deterring cover 3 and the speaker 4. For this purpose, the main part 60 is designed to be detachable to the side wall 61 so as to contain each member. When the main part 60 and the side wall 61 are integrally formed, the integrally formed main part 60 and the side wall 61 may be detachable to the base 63.

At the lower surface of the circuit board 2, a light emitting element L constituted with a light emitting diode and the like and a light receiving element PD constituted with a photo diode and the like are mounted. The light emitting element L becomes a main part of the light emitting unit 10 and the light receiving element PD becomes a main part of the light receiving unit 11.

The optical base 1 constituting the smoke sensing chamber 101 has a bottom plate 13 like a disc and a circumferential wall 14 formed along the circumference of the bottom plate 13. On the lower face of the bottom plate 13, a plurality of labyrinth walls 12 are provided so as to surround the light emitting unit 10 and the light receiving unit 11. Container portions 16, 17 for containing the light emitting element L and the light receiving element PD, respectively, are integrally formed with the optical base 1.
The light emitting element L and the light receiving element PD can be shielded from the outside noise by the container portions 16, 17, When the optical base 1 is mounted upwardly on the sheet of Fig. 5 to the circuit board 2, the light emitting element L and the light receiving element PD are contained in the container portions 16, 17, respectively. For this purpose, a part of the optical base 1 is designed so as not to have the bottom plate 13 corresponding to the container portions 16, 17 for containing the light emitting element L and the light receiving element PD.

The insect deterring cover 3 is cylindrical with a bottom and has an insect deterring screen 31 so as to prevent the insects, dust, and the like from entering the smoke sensing chamber 101 and is covered over the smoke sensing chamber 101 constituted with the optical base 1. The insect deterring cover 3 is constituted in such a manner that the upper end 32 is fitted in the circumferential wall 14 of the optical base 1 and a bottom 33 opposite to the upper end 32 has a circular opening 34 surrounded with an isolation wall 35. Further, an air vent 36 communicating with the smoke sensing chamber 101 is provided so as to obtain adequate sound pressure in a space for containing the speaker 4 in the opening 34 when the speaker 4 fully vibrates.

The speaker 4 is placed on a bottom portion 51 of the protecting cover 5 and is designed to be fitted in the opening 34 of the insect deterring cover 3. Namely, the speaker 4 is provided in a space formed between the opening 34 of the insect deterring cover 3 and the protecting cover 5. The speaker 4 outputs a fire alarm when the smoke sensor 100 determines a fire. The speaker 4 may output an alarm sound like a buzzer in a conventional manner or may output a fixed alarm pattern stored in advance by voice synthesis or real voice in advance.

The protecting cover 5 is formed cylindrical and has a bottom comprising the bottom portion 51 and a circumferential wall 52. The bottom portion 51 has a plurality of sound holes 51a for outputting with the speaker 4. The circumferential wall 52 is formed with an opening 52a along the circumferential direction and smoke flows from the opening 52a. The protecting cover 5 is engaged in an opening 62 of the sensor body 6 when the above-mentioned members are assembled to the sensor body 6.
Thus, the smoke sensing chamber 101, the insect deterring cover 3 and the speaker 4 which project out of the opening 62 of the sensor body 6 are covered with the protecting cover 5. It goes without saying that the speaker 4 may be contained in the protecting cover 5 when being fitted in the opening 34 of the insect deterring cover 3.

For installing the smoke sensor 100, while the circuit board 2, the optical base 1, the insect deterring cover 3, the speaker 4 and the protecting cover 5 are mounted on the base 63, the base 63 is screwed on the ceiling. A base cover constituted with the main part 60 and the side wall 61 is covered on the base 63, and the cylindrical portion constituted with the optical base 1, the insect deterring cover 3, the speaker 4 and the protecting cover 5 is projecting out of the opening 62. When the base 63 and the base cover are engaged for integrating the sensor body 6, the smoke sensor 100 is fitted on the ceiling.

The smoke detection unit 100 is thus fitted, a head portion comprised of the optical base 1, the insect deterring cover 3, the speaker 4 and the protecting cover 5 is constituted under the base portion comprised of the sensor body 6 to be fitted on the ceiling. Then, the sensor body 6 contains the circuit board 2 installed with the smoke sensing chamber 101, and the smoke sensing chamber 101 covered with the insect deterring cover 3 is projecting out of the opening 62. Further, the protecting cover 5 formed with sound holes 51 a is fitted in the opening 62 of the sensor body 6, thus the speaker 4 is provided under the insect deterring cover 3.

The structure of the smoke sensor shown in Fig. 5 is used as a basic structure in the following embodiments and each embodiment has characteristics in the structure in the smoke sensing chamber 101. In each embodiment, the explanation of common members shown in Fig. 5 is omitted and the characteristics in each embodiment are detailed.

### EMBODIMENT 1

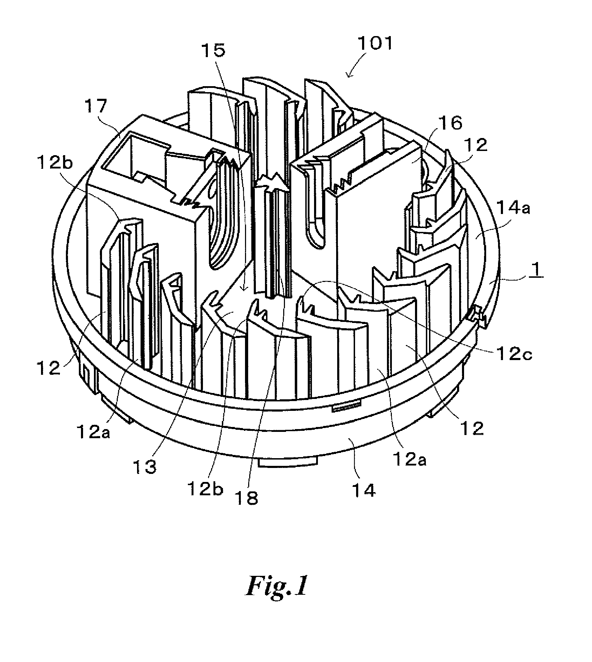

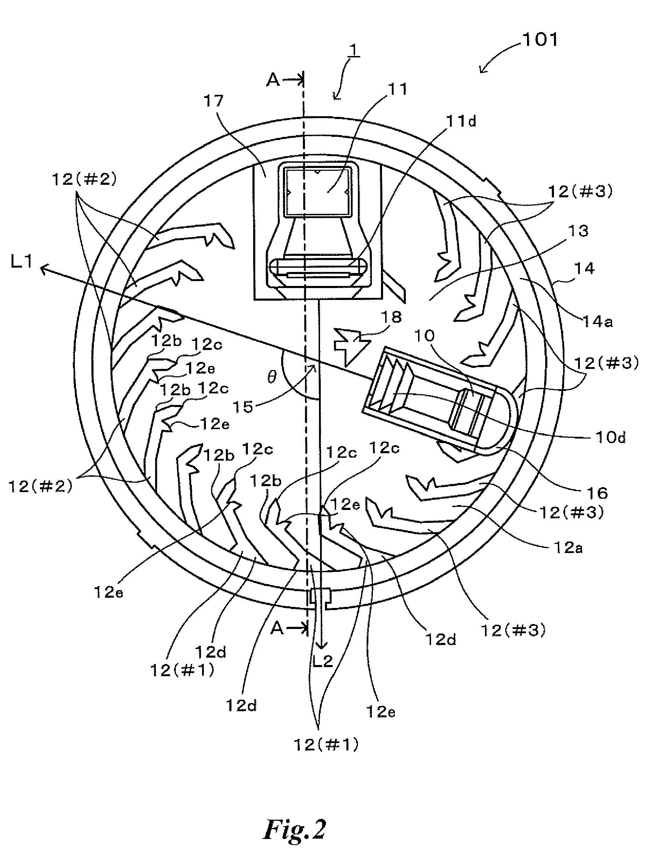

The Embodiment 1 of the smoke sensor of the present invention is explained referring to drawings. Fig. 1 is a perspective view illustrating the smoke sensing chamber of the smoke sensor in this Embodiment 1. Fig. 2 is a plan view of the smoke sensing chamber (plan view seen from below when the optical base is provided on a ceiling).

As shown in Fig. 1, the smoke sensing chamber 101 of the smoke sensor 100 in this embodiment is comprised of the optical base 1 of which cross section is circular. The optical base 1 is tubular having the bottom plate 13 and the circumferential wall 14 and its upper part is opened. The container portion 16 for the light emitting unit 10 and the container portion 17 for the light receiving unit 11 are provided for the optical base 1 and a plurality of labyrinth walls 12 (#1-#3) are provided along the inside of an inner step portion 14a of the circumferential wall 14.

The light emitting element L of the light emitting unit 10 and the light receiving element PD of the light receiving unit 11 are mounted on the circuit board 2 separately constituted from the optical base 1 in such a manner that the light axes L1, L2 thereof intersect with a fixed angle θ (for example 130°) as shown in Fig. 2 and Fig. 5. As mentioned above, the optical base 1 and the circuit board 2 are assembled to be contained in the sensor body 6 (see Fig. 5). The light emitting element L and the light receiving element PD are contained in the container portions 16, 17, respectively.

Each of the plurality of labyrinth walls 12 (#1-#3) is erected on the bottom plate 13 so as to project above the circumferential wall 14 of the optical base 1. A smoke inlet 12a is constituted by the gap between each one of the labyrinth walls 12(#1-#3) and smoke flows into the smoke sensing chamber 101 from the smoke inlet 12a. The insect deterring cover 3 and the protecting cover 5 covering the entire smoke sensing chamber 101 (refer to Fig. 5) have an opening or a space so as to feed smoke into the smoke inlet 12a formed by the labyrinth walls 12.

The labyrinth walls 12 (#1-#3) guide the smoke entered in the smoke inlet 12a into the smoke sensing zone 15 around the center of the smoke sensing chamber 101. The labyrinth walls 12 (#1-#3) have a bent portion 12b near the inside of the smoke sensing chamber 101 so as to be formed like the letter "L" in a plan view in order to shield the outside light entered from the smoke inlet 12a.

The bent portion 12b of the labyrinth wall 12 (#1-#3) is designed to direct the smoke sensing zone 15. The tip end of the labyrinth wall 12 in the direction of the smoke sensing zone 15 is tapered to be formed as a smoke guide end 12c for directing the smoke flown from the smoke inlet 12a formed by the gap between the labyrinth walls 12 (#1-#3) into the smoke sensing zone 15. Thus, the labyrinth walls 12 (#1-#3) can smoothly guide the smoke entered from the smoke inlet 12a to the smoke sensing zone 15 along the bent portion 12b and the smoke guide end 12c and the smoke is diffusely reflected by the tapered smoke guide end 12c.

When thus constructed smoke guide end 12c is provided for the labyrinth wall 12(#2) facing the light emitting unit 10, the area of the end face of the portion of the labyrinth wall 12(#2) facing the light emitting unit 10 becomes small. Therefore, the light emitted from the light emitting unit 10 is diffusely reflected on the smoke guide end 12c of the labyrinth wall 12(#2), so that it can be prevented from directly inputting into the light receiving unit 11.

The plurality of labyrinth walls 12(#1-#3) have a projection for blocking and reflecting outside light 12e at a part inside of the bent portion 12b (namely into the circumferential wall 14 side of the optical base 1) as shown in Fig. 2. The projection for blocking and reflecting outside light 12e reflects the light entered from the smoke inlet 12a into the outer circumferential side of the smoke sensing chamber 101.

When such a projection for blocking and reflecting outside light 12e is provided for the labyrinth wall 12(#1) facing the light receiving unit 11, the outside light entered from the smoke inlet 12a formed by the labyrinth wall 12(#1) facing the light receiving unit 11 is reflected on the projection for blocking and reflecting outside light 12e. Thus, the outside light entered from the smoke inlet 12a formed by the labyrinth wall 12(#1) facing the light receiving unit 11 can be prevented from reaching the light receiving unit 11.

Further, the labyrinth wall 12(#1) facing the light receiving unit 11 among the plurality of labyrinth walls 12 (#1-#3) is formed in such a manner that the area directed to the outward of the smoke sensing chamber 101, namely to the circumferential wall 14 of the optical base 1, is spread toward the bottom as shown in Fig. 2. The labyrinth wall 12(#1) has an outside light shielding end 12d for shielding the smoke entered from the outside of the smoke sensing chamber 101. Thus, the smoke inlet 12a between the labyrinth walls 12(#1) becomes small and the amount of outside light which directly reaches the light receiving unit 11 can be reduced.

As mentioned above, the light emitting unit 10 and the light receiving unit 11 are mounted on the circuit board 2 in such a manner that the light axis L1 of the light emitting element L and the light axis L2 of the light receiving element PD intersect with a fixed angle θ. Thus, the light receiving unit 11 is constituted where it does not directly receive the light emitted from the light emitting unit 10.

The circuit board 2 mounted with the light emitting unit 10 and the light receiving unit 11 is installed on the base plate 13 of the optical base 1 from the opposite direction where the labyrinth walls 12 (#1-#3) are erected from the base plate. The light emitting unit 10 and the light receiving unit 11 are projecting from the bore (not shown) of the bottom plate 13 formed corresponding to each light emitting unit 10 and light receiving unit 11 to be contained in the container portions 16, 17 provided for the optical base 1, respectively, as mentioned above. The reference numeral 18 shows a light shielding wall (light shielding column) preventing the light emitted from the light emitting element 10 from directly reaching the light receiving unit 11.

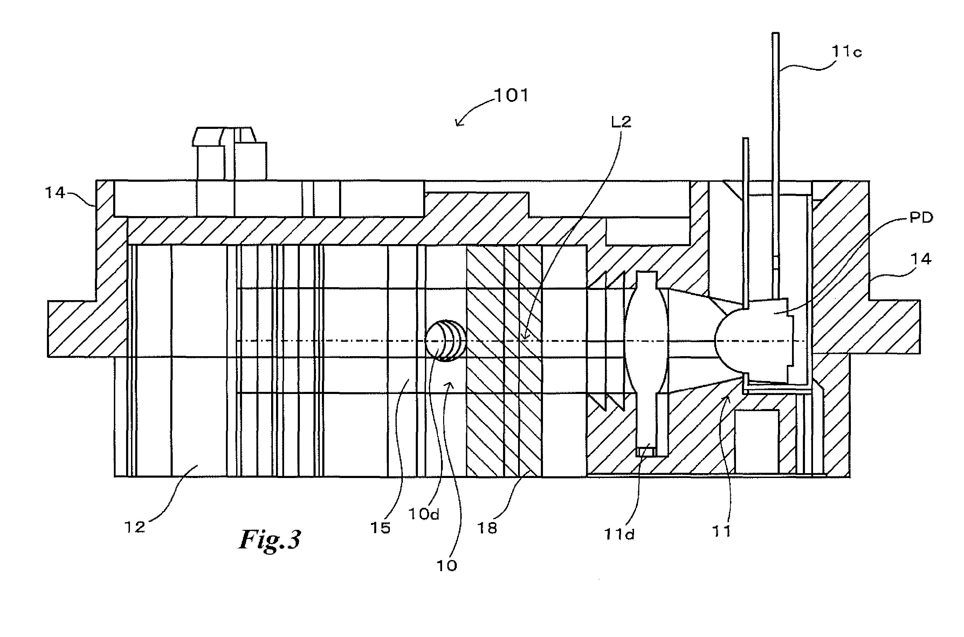

Fig. 3 is a fragmental sectional view along the line A-A in Fig. 2. The light receiving unit 11 has the light receiving element PD like a photo diode mounted on the circuit board 2 via a lead 11c and a condenser lens 11d, which is provided facing the light receiving element PD, for collecting the light along the light axis L2 shown with a dotted line in Fig. 3. On the other hand, the light emitting unit 10 includes the light emitting element L like LED (refer to Fig. 5) and the light emitted from the light emitting unit 10 is collected by the light condenser lens 10d and irradiated to the smoke sensing zone 15. Thus, the scattering light scattered by the smoke particles entered in the smoke sensing zone 15 is received in the light receiving unit 11.

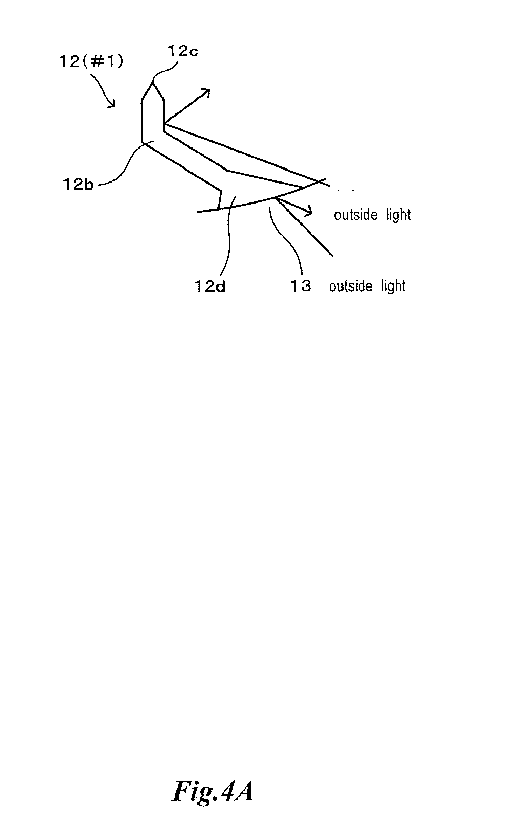

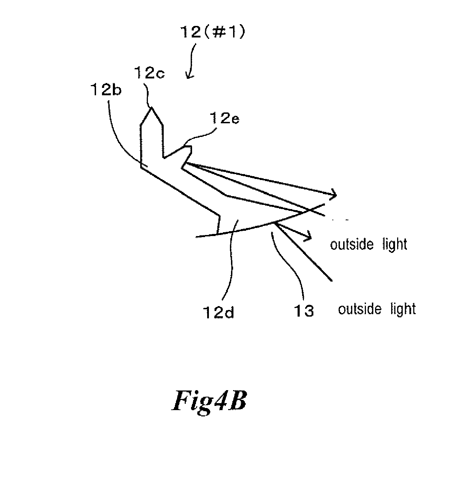

Fig. 4A and Fig. 4B are explanatory views of the projection for blocking and reflecting outside light of the labyrinth wall. Fig. 4A shows a labyrinth wall without the projection for blocking and reflecting outside light and Fig. 4B shows the function of a labyrinth wall having the projection for blocking and reflecting outside light

According to the present invention, by providing the projection for blocking and reflecting outside light 12e, the outside light entered in the smoke sensing chamber 101 from the smoke inlet 12a between the labyrinth walls 12(#1) is reflected on the base end of the projection for blocking and reflecting outside light 12e as shown in Fig. 4B.
Therefore, the outside light can be prevented from entering the smoke sensing chamber 101 by providing the projection for blocking and reflecting outside light 12e. However, when such a projection for blocking and reflecting outside light 12e is not provided, the outside light is reflected on the base end of the bent portion 12b of the labyrinth wall 12(#1) as shown in Fig. 4A and is allowed to be entered into the smoke sensing chamber 101.

Therefore, the projection for blocking and reflecting outside light 12e is effectively functioned if the smoke inlet 12a formed as the gap between the labyrinth walls 12(1#) is large. Therefore, in the present embodiment, the projection for blocking and reflecting outside light 12e is provided for all labyrinth walls 12(#1-#3) surrounding the smoke sensing chamber 101 in order to improve the fluidity of smoke like the smoke guide end 12c. The labyrinth wall 12(#1) provided so as to face the light receiving unit 11 among the labyrinth walls 12(#1-#3) provided around the smoke sensing chamber 101 has an outside light shielding end 12d formed so as to be spread toward the bottom.

### EMBODIMENT 2

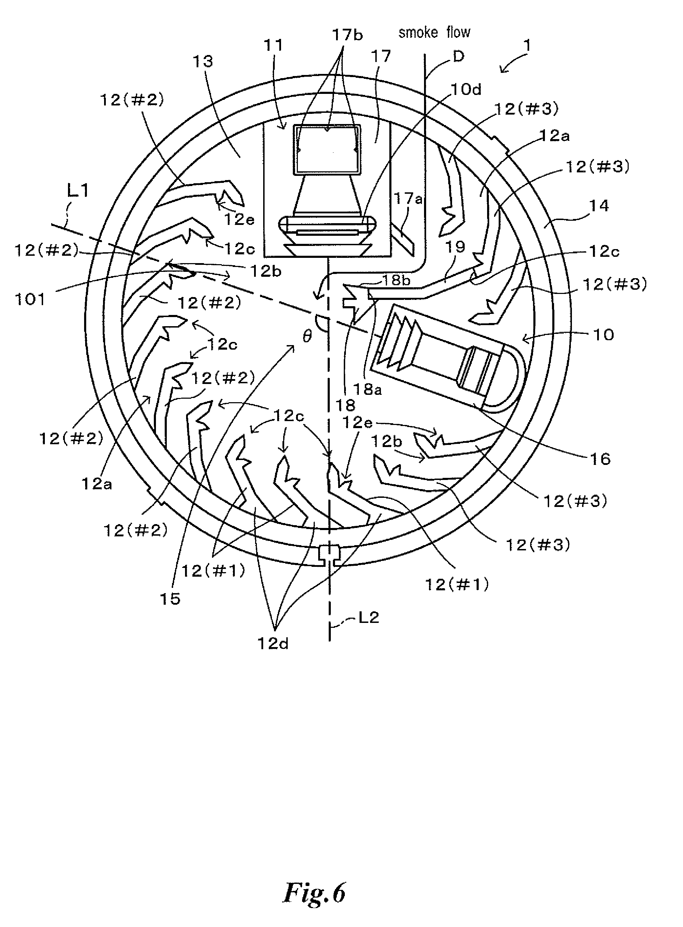

The second embodiment of the smoke sensor of the present invention is explained referring to the drawings. Fig. 6 is a plan view illustrating the internal structure of the smoke sensing chamber of the smoke sensor of this embodiment. In the structure of this embodiment, the members which are used for the same object as those of the smoke sensor of the Embodiment 1 have the same reference numbers and their explanation is omitted.

The smoke sensor 100 of the present invention has the light emitting element 10 (light emitting portion) in the smoke sensing chamber 101 having the plurality of labyrinth walls 12(#1-#3) therearound and has the light receiving unit 11 (light receiving portion) at a place where the light emitted from the light emitting unit 10 is not directly received, thereby constituting the smoke sensing zone 15. The scattering light from smoke entered the smoke sensing zone 15 from the smoke inlet 12a which is the gap between the labyrinth walls 12(#1-#3) is received in the light receiving unit 11, and the smoke sensor 100 outputs a fire alarm signal to inform a fire when the light receiving signal exceeds a threshold.

The internal structure of the optical base 1 having the smoke sensing chamber 101 of the smoke sensor 100 is explained referring to Fig. 6. The plan view of Fig. 6 shows the optical base 1 before being fixed to the circuit board 2. As shown in Fig. 6, the optical base 1 has the light emitting unit 10, the light receiving unit 11, the plurality of labyrinth walls 12(#1-#3), the light shielding wall 18, and a partition member (smoke guide wall) 19.

The light emitting unit 10 is constituted with the light emitting element L like a light emitting diode mounted on the circuit board 2 and is contained in the container portion 16. On the other hand, the light receiving unit 11 is constituted with the light receiving element PD like a photo diode mounted on the circuit board 2 and is contained in the container portion 17. The reference numeral 17b in Fig. 6 is a projection for fixing the light receiving element PD. The light emitting element 10 and the light receiving unit 11 are arranged in such a manner that the light axes L1, L2 thereof intersect with a predetermined angle θ and the light receiving unit 11 is provided where the light emitted from the light emitting element 10 is not directly received.

The light axis L1 is an axis of light emitted from the light emitting unit 10, the light axis L2 is an axis of light received in the light receiving unit 11, and the area where the light axis L1 and the light axis L2 intersect becomes the smoke sensing zone 15. Thereby, the light from the light emitting unit 10 is irradiated in the direction shown with the light axis L1 and the scattering light scattered by the smoke particles entered in the smoke sensing zone 15 is received in the light receiving unit, thereby detecting smoke.

The plurality of labyrinth walls 12 (#1-#3) are erected from the bottom plate 13 of the optical base 1 and are formed so as to surround the smoke sensing zone 15 around the place where the light axis L1 of the light emitting element 10 and the light axis L2 of the light receiving element 11 are overlapped. The labyrinth walls 12 (#1-#3) are constituted with a plate-like fin (wall body) having the height to project out of the circumferential wall 14 and are designed so as to enhance the shielding effect from the outside light and to secure the fluidity of smoke by differentiating the shape depending on the place to be arranged.
In the embodiment in Fig. 6, the labyrinth walls, roughly divided into two patterns, namely labyrinth walls 12(#1) and labyrinth walls 12(#2, #3), are provided appropriately. Further, the distance between the adjacent labyrinth wall 12 (#1-#3) is substantially equal except for the place where the light emitting unit 10 and the light receiving unit 11 are provided, and the gap between the labyrinth walls 12 (#1-#3) forms the smoke inlet 12a.

Disturbance of the outside light for smoke detection is specifically large on the light axis L2 of the light receiving unit 11 and therearound, so that the outside light is required to be firmly shielded. For this purpose, on the end of the circumferential wall 14 side, the labyrinth wall 12(#1) has the outside light shielding end 12d formed so as to have a thickness larger than that of the smoke guide end 12c at the smoke sensing zone 15 side of the labyrinth wall 12(#1), thereby blocking the outer light. The labyrinth wall 12(#1) at the smoke sensing zone 15 side forms an angled wall body divided into two parts, namely the smoke guide end 12c and the projection for blocking and reflecting outside light 12e. The edge of the smoke guide end 12c is tapered, thus it is designed so as not to scatter the incident light.

The labyrinth walls 12(#2,#3) provided other than the place on the light axis L2 of the light receiving unit 11 and theraround are different from the labyrinth wall 12(#1) in that the outside light shielding end 12d which spreads toward the bottom is not formed at the end at the circumferential wall 13 side. The labyrinth walls 12(#2,#3) are formed to have a bent portion 12b like the labyrinth wall 12(#1) so as to guide smoke into the smoke sensing zone 15, and their ends at the smoke sensing zone 15 side are formed to be a wall body divided into two portions, namely the smoke guide end 12c and the projection for blocking and reflecting outside light 12e.
The edge of the smoke guide end 12c is tapered like that of the labyrinth wall 12(#1). In addition to the labyrinth walls 12 (#1-#3), a shielding wall 17a is provided to effectively shield the outside light around the light receiving unit 11. In Fig. 6, the shielding wall 17a is projecting out of the container portion 17 to the labyrinth wall 12(#3) side.

Further, the light shielding wall 18 is provided around the center of the smoke sensing chamber 101, namely around the smoke sensing zone 15 so as to prevent the light emitted from the light emitting unit 10 from directly entering the light receiving unit 11. The partition member 19 connects the smoke guide end 12c of the labyrinth wall 12(#3) facing the smoke sensing zone 15 provided at the area held with the light emitting unit 10 and the light receiving unit 11 and a facing end 18a of the light shielding wall 18 facing the labyrinth wall 12(#3).
Accordingly, a smoke guide wall is constituted with the partition member 19. Namely, the smoke entered from the smoke inlet 12a does not stay in the place between the light emitting unit 10 and the light receiving unit 11 by means of the partition member 19 and is guided to the smoke sensing zone 15 as shown with the arrow D.

When the face 18b of the light shielding wall 18 facing the light receiving unit 11 is inclined into the tip end toward the light receiving unit 11, the light from the light emitting unit 10 is effectively prevented from being entered the light receiving unit 11. The light shielding wall 18, the partition member 19 and the labyrinth wall 12(#3) may not be connected as shown in the figure, but they may be integrally formed.

Accordingly, the partition member 19 connects the facing end 18a of the light shielding wall 18 and the smoke guide end 12c of the labyrinth wall 12(#3) facing the smoke sensing zone 15 provided at the area held with the light emitting unit 10 and the light receiving unit 11 and the area also excluding the smoke sensing zone 15. Therefore, the smoke guide wall is formed with the partition member 19. At first, the light other than the scattering light by smoke is prevented from entering the light receiving unit 11 by the light shielding wall 18 and the partition member 19.
Further, the smoke entered through the smoke inlet 1a between the labyrinth walls 12(#3) is smoothly guided to the smoke sensing zone 15 by the smoke guide wall constituted with the partition member 19. In particular, the partition member 19 connected with the light shielding wall 18 is provided in a place held with the light emitting unit 10 and the light receiving unit 11 where the fluidity of smoke is deteriorated, so that preventing smoke from being retained. Therefore, the response to smoke in the smoke sensing chamber 101 becomes fast and the smoke detection unit 100 with high detection accuracy can be achieved.

### EMBODIMENT 3

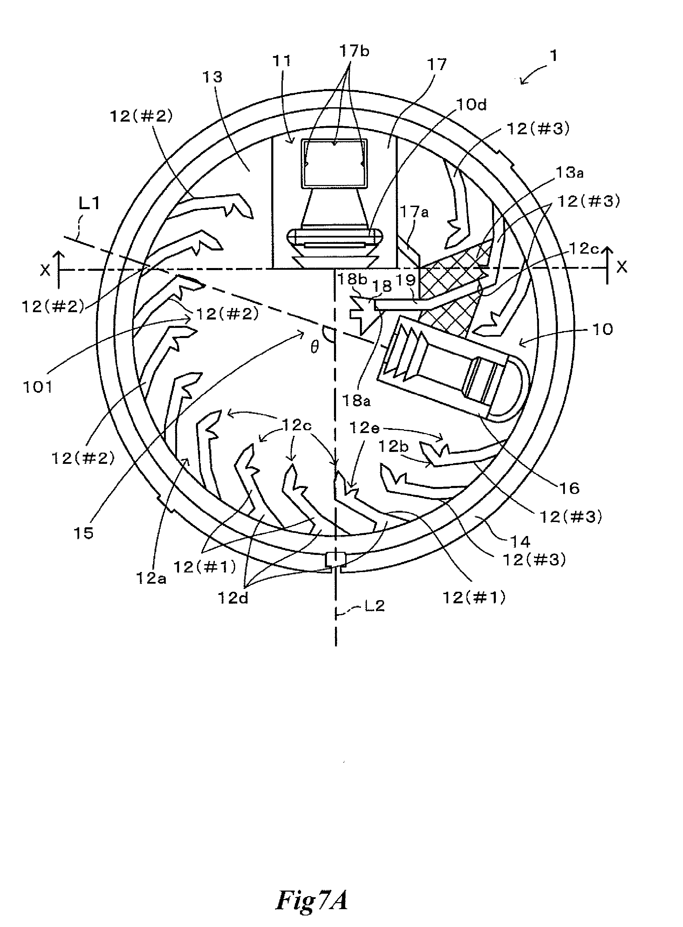

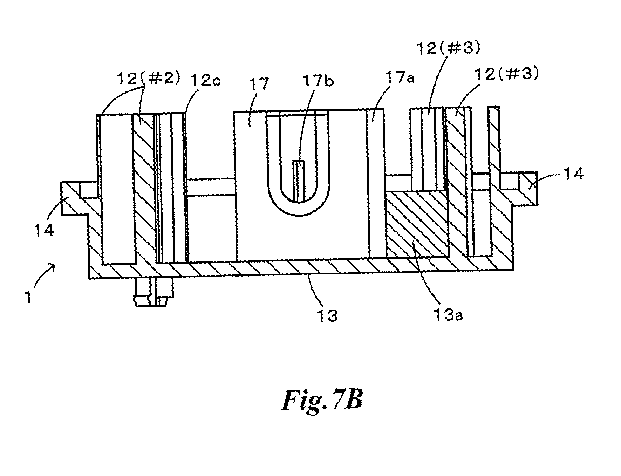

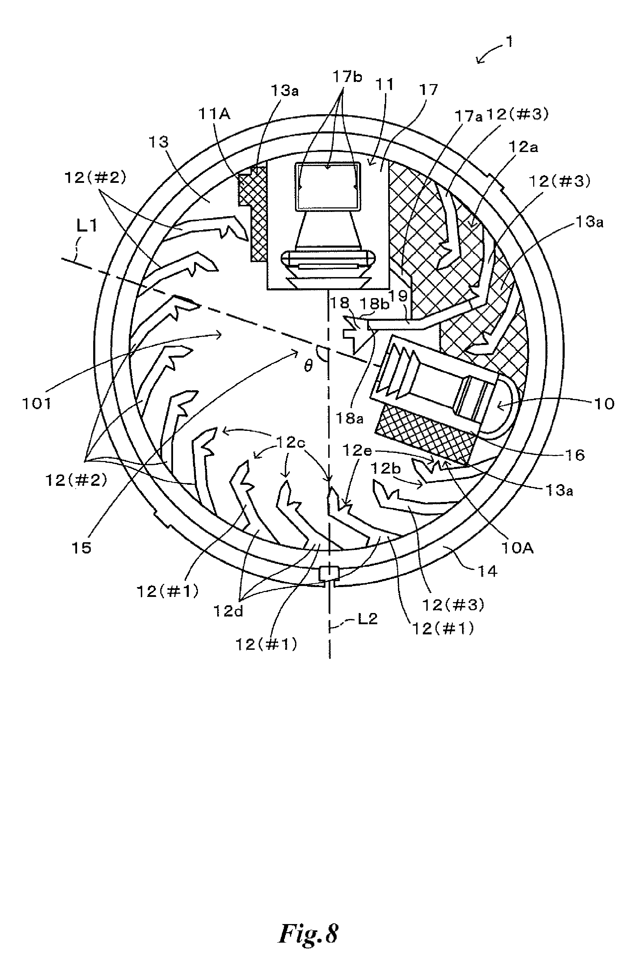

The Embodiment 3 of the present invention is explained referring to the drawings. Fig. 7A is a plan view illustrating the internal structure of the smoke sensing chamber of the smoke sensor of this embodiment. Fig. 7B is a fragmental sectional view along the line X-X in Fig. 7A. Fig. 8 is a plan view illustrating the internal structure of the smoke sensing chamber of the smoke sensor of a modification of this embodiment.

The smoke sensor of this embodiment is different from that shown in Fig. 6 in that a raised bottom 13a shown in Fig. 7B is formed around the area where the smoke fluidity is deteriorated in the optical base 1. Fig. 7A and Fig. 8 show the area where the raised bottom 13a is formed with a cross-hatching. In this embodiment, the members which are used for the same object as those of the smoke sensor of the Embodiment 2 have the same reference numbers and their detailed explanation is omitted. Fig. 7A, Fig. 7B and Fig. 8 show the optical base 1 before fitted to the circuit board 2 like Fig. 6 and is shown upside down relative to the condition fitted on the ceiling and so on.

In the embodiment of Fig. 7A, a closed space constituted with the raised bottom 13a is formed around the partition member 19 in the area where the smoke fluidity is low, namely the area held with the light emitting unit 10 and the light receiving unit 11. The labyrinth wall 12(#3) provided where the raised bottom 13a is formed is projecting over the raised bottom 13a as shown in Fig. 7B.

In the embodiment of Fig. 8, the raised bottom 13a is formed in the area where the smoke fluidity is low, namely a wide area held with the light emitting unit 10 and the light receiving unit 11. In this embodiment, a closed space with the raised bottom 13a is also formed in the areas (10A, 11A) adjacent to the light emitting unit 10 and the light receiving unit 11 which are opposite to the space held with the light emitting unit 10 and the light receiving unit 11.

When all of the smoke sensing chamber 101 or the wide area thereof has a raised bottom, the light emitted from the light emitting unit 10 is apt to be reflected in the smoke sensing chamber 101, thereby exerting influence on reception of light in the light receiving unit 11. Therefore, when the raised bottom 13a is formed where the light from the light emitting unit 10 is hardly reflected as shown in Fig. 7A and Fig. 8, smoke can be effectively guided in the smoke sensing zone 15 without being influenced by the reflected light.

As constructed like Fig. 7A and Fig. 8, smoke which is going to stay in the area where the smoke fluidity is low has nowhere to go, thereby facilitating flowing of smoke into the smoke sensing zone 15 more smoothly. Further, the volume in the smoke sensing chamber 101 is reduced by forming the raised bottom 13a, so that the density of entered smoke is increased. Therefore, by the synergetic effect of the above-mentioned partition member 19 (smoke guide wall) and the raised bottom 13a, the response of smoke is enhanced in the smoke sensing chamber 101, thereby achieving the smoke sensor 100 with high smoke detection accuracy.

The height of the raised bottom 13a is set so as not to narrow the smoke inlet 12a, the raised bottom 13a may not be limited to be solid shown with the shaded area in Fig. 7B, and it may be hollow. What matters is that it is designed that smoke does not enter the shaded area with the raised bottom 13a in Fig. 7B. When the raised bottom 13a is designed to be hollow, the amount of material is reduced to save its weight. The area formed with the raised bottom 13a is not limited to the area shown in the embodiment of Fig. 7A and Fig. 8A and may be formed only the areas (10A, 11 A) adjacent to the light emitting unit 10 and the light receiving unit 11 which are opposite to the area held with the light emitting unit 10 and the light receiving unit 11.

### Embodiment 4

The Embodiment 4 of the smoke sensor of the present invention is explained referring to the drawings.

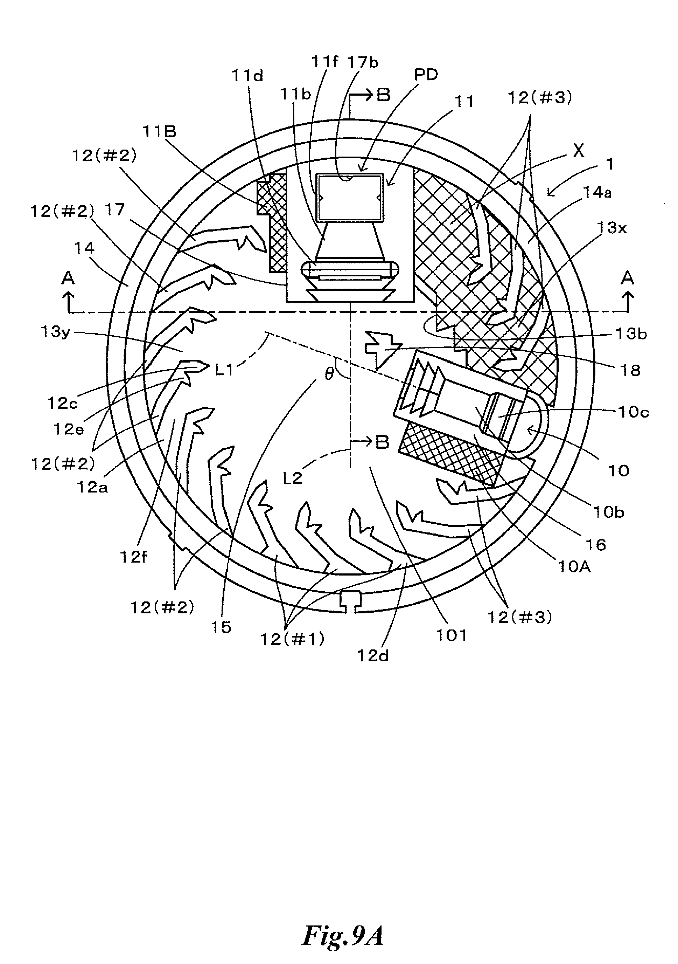

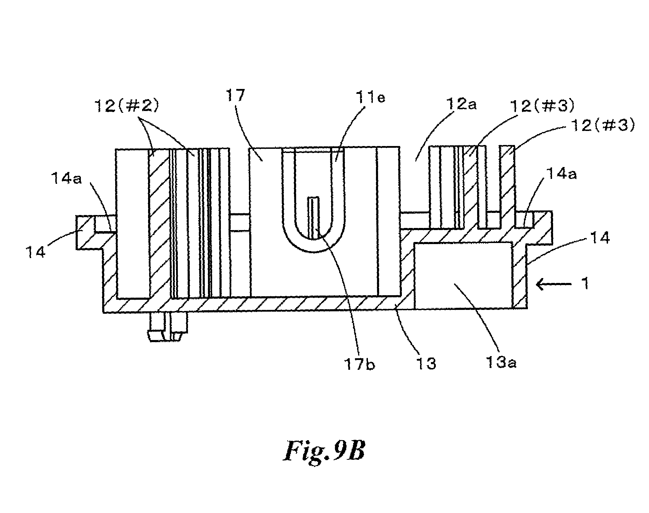

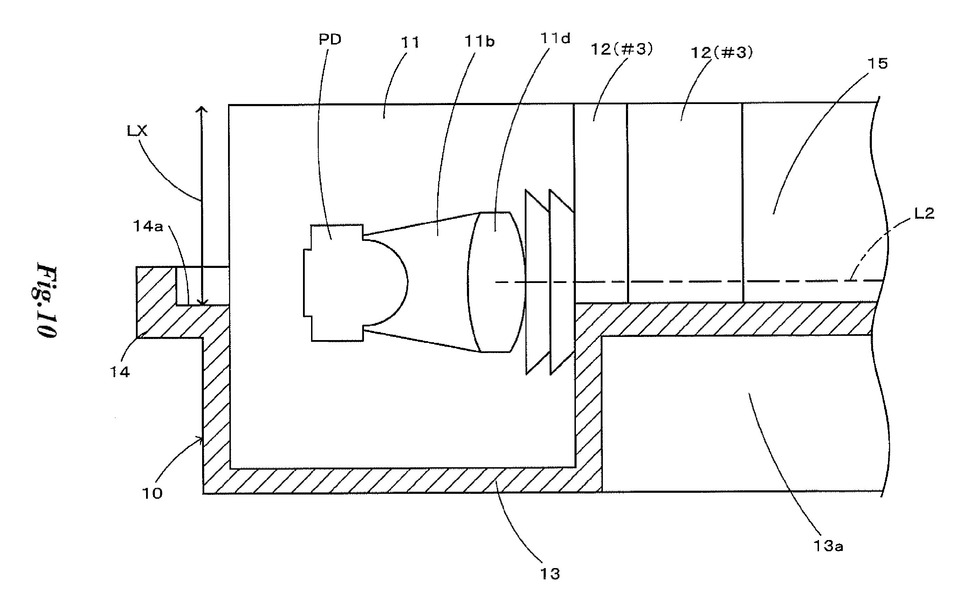

Fig. 9A is a plan view illustrating the internal structure of the smoke sensing chamber of the smoke sensor of this embodiment. Fig. 9B is a fragmental sectional view along the line A-A in Fig. 9A. Fig. 10 is a fragmental sectional view along the line B-B in Fig. 9A. In this embodiment, the members which are used for the same object as those of the smoke sensor of the Embodiment 3 have the same reference numbers and their detailed explanation is omitted.

The optical base 1 of the smoke detection unit 100 is a tubular body comprising the circumferential wall 14 and the bottom plate 13, includes the light emitting unit 10 and the light receiving unit 11, and is provided with a plurality of labyrinth walls 12(#1-#3) along the inner periphery of the circumferential wall 14 as shown in Fig. 9A. The circumferential wall 14 is connected on the upper end of the inner step portion 14a. Fig. 9A only shows the smoke sensing chamber 101 (optical base 1) and the light emitting element L and the light receiving element PD are not shown (see Fig. 5).

The light emitting unit 10 having the light emitting element L made of a light emitting diode mounted on the circuit board 2 is covered with the container portion 16. A cavity 10b being a light path is formed forward the container 10c for containing the light emitting element L. The container 17 is designed to cover the light receiving unit 11 having the light emitting element PD constituted with the photo diode mounted on the circuit board 2 via the lead 11c (see Fig. 3).
A cover 11f for the light receiving element surrounding the light receiving element PD and the condenser lens 11d are provided via a cavity 11b being the light path. A light receiving window 11e is provided for the portion including the light axis L2 of the container portion 17 of the light receiving unit 11. The reference numeral 17b in Fig. 9A and Fig. 9B shows a projection for fixing the light receiving element PD.

The light emitting unit 10 and the light receiving unit 11 are arranged in such a manner that the light axes L1, L2 thereof intersect at a fixed angle θ in a plan view. Namely, the light receiving unit 11 is provided where it does not directly receive the light emitted from the light emitting unit 10. In the side view, the light axes L1, L2 are parallel to the bottom plate 13 of the optical base 1.

The light emitting unit 10 emits light along the light axis L1 and reflects the light on the smoke particles entered the smoke sensing zone 15 around the center in a plan view. The light receiving unit 11 is designed to allow entering of the scattering light reflected from the smoke particles. The light shielding wall 18 is erected so as not to directly receive the light from the light emitting unit 10 in the light receiving unit 11.

The plurality of labyrinth walls 12(#1-#3) are erected from the inner bottom surface of the bottom plate 13 of the optical base 1 to the upper end of the smoke sensing chamber 101 so as to project from the circumferential wall 14 into the inside of the optical base 1. The smoke inlet 12a forming the lower end of the opening at the upper end of the circumferential wall 14 by means of the gap between two labyrinth walls 12 (#1-#3) at the end of the circumferential wall 14 side. A smoke inflow path 12f is formed by the gap held with two labyrinth walls 12(#1-#3) inside of the smoke inlet 12a.

The labyrinth walls 12(#1-#3) are shaped and designed so as to guide the smoke flown from the smoke inlet 12a through the smoke inflow path 12f to the smoke sensing zone 15. The smoke guide ends 12c and the projection for blocking and reflecting outside light 12e are provided for the end of the labyrinth walls 12(#1-#3) near the center of the optical base 1 and the tip end of the smoke guide end 12c directed inward is pointed. Thereby, the outside light to be entered from the smoke inlet 12a is shielded or is prevented from entering the light receiving unit 11.
Further, the labyrinth wall 12(#1) formed opposite to the light receiving unit 11 has the outside light shielding end 12d of which outward end is formed to be spread toward the bottom. The outside light shielding end 12d blocks the outside light from the smoke inlet 12a between the labyrinth walls 12(#1) and prevents the outside light entered from the smoke inlet 12a from directly reaching the light receiving unit 11.

The labyrinth walls 12(#1-#3) are provided at regular intervals along the circumference of the smoke sensing chamber 101 except for the light emitting unit 10 and the light receiving unit 11. Namely, in the area (short arc area) 13x held with the light emitting unit 10 and the light receiving unit 11, the labyrinth walls 12(#1-#3) are provided along the circumference at regular intervals and they are provided along the circumference at regular intervals in a long arc area 13y opposite to the short arc area 13x.

In the short arc area 13x, the raised bottom 13a is formed at an area X of the bottom plate 13 of the optical base 1 as shown with a cross-hatching in Fig. 9A. At the area where the raised bottom 13a is formed, the labyrinth wall 12(#3) is erected extending from the inner bottom surface of the raised bottom 13a to the upper end of the smoke sensing chamber 101. At the area other than the raised bottom 13a is provided, the labyrinth wall 12(#1-#3) are erected from the inner bottom surface of the bottom plate 13 of the optical base 1.

The raised bottom 13a is integrally formed with the optical base 1, however, they may be provided separately. In this embodiment, the raised bottom 13a is formed hollow, however, it may be solid-core like the Embodiment 3. The raised bottom 13a is required to be formed so as to raise the bottom of the smoke inflow path 12a formed with the labyrinth wall 12(#2).

Providing such a constructed raised bottom 13a, a closed space is formed so as not to be a reservoir area of air with low smoke density where air enters under the lower end of the smoke inlet 12a as shown in Fig. 9B. The height of the raised bottom 13a is substantially same as the upper end of the circumferential wall 14, namely the lower end of the smoke inlet 12a. Namely, there is no poorly-ventilated area by the circumferential wall 14 at the short arc area 13x provided with the raised bottom 13a.

The short arc area 13x is a space where the light emitting unit 10 and the light receiving unit 11 are close in the smoke sensing chamber 101 and smoke has difficulty to enter therein because of the structure of the light emitting unit 10 and the light receiving unit 11 comparing with the long arc area 13y. Therefore, the smoke amount in the short arc area 13x is small, but such a small amount of smoke can reach the smoke sensing zone 15 as far as proper airflow is ensured.

On the contrary, if there is any spaces with bad ventilation in the short arc area 13x, smoke cannot enter therein to generate a space where air stays and its smoke density is low, however, in the present embodiment, such a bad ventilated space is rendered to be a closed space by the raised bottom 13a, thereby preventing an area with low smoke density. Accordingly, when air flows in the smoke sensing chamber 101 through the air vent 36 (see Fig. 5) of the insect deterring cover 3 by the vibration of the speaker 4 (see Fig. 5) while informing a fire alarm, it is hardly caused that the air with low smoke density is diffused to lower the smoke density in the smoke sensing zone 15.

Thus, when the smoke sensor 100 is constructed such that the air vent 36 is provided at the bottom 33 of the insect deterring cover 3 (see Fig. 5) to make the backward space of the speaker 4 broad so as to easily transmit the vibration of the speaker 4 to the smoke sensing chamber 101 via air and to improve the air diffusion function by the vibration of the speaker 4, the raised bottom 13a is effectively operated.

By providing the raised bottom 13a for the short arc area 13x, the height of the inner bottom face is increased to form a closed space where air cannot stay, so that the smoke passing the smoke inflow path 12f can be smoothly guided to the smoke sensing zone 15 along the raised bottom 13a. As the result, balanced smoke guide can be achieved in the short arc area 13x and the long arc area 13y, thereby providing a high accurate smoke sensor.

Because the height of the raised bottom 13a and that of the circumferential wall 14 of the optical base 1 are substantially same, the space surrounded with the circumferential wall 14 can be a closed space in which air does not enter by the raised bottom 13a. Thus, a poorly-ventilated area is not formed in the smoke flow path 12f, stagnancy of smoke is hardly caused, and the smoke entered from the smoke inlet 12a can be guided along the face of the raised bottom 13a into the smoke sensing zone 15 by the most direct way.

Fig. 10 is a diagrammatical view illustrating the height relation of the raised bottom 13a, the smoke sensing zone 15, the optical axis L2 of the light receiving unit 11 and the circumferential wall 14 of the optical base 1 and is a diagrammatical vertical sectional view along the line B-B in Fig. 9A. As shown in Fig. 10, the smoke sensing zone 15 and the optical axis L2 of the light receiving unit 11 are formed at substantially same height as the circumferential wall 14 of the optical base 1, thereby achieving a more effective smoke detection. The reference LX in the figure shows the vertical length of the opening of the smoke inlet 12a. Fig. 10 diagrammatically compares and explains the height of them, and the light emitting unit 10, the light shielding wall 18, the fixing structure of the light receiving element PD and the like are omitted.

On the other hand, in the long arc area 13y, the labyrinth walls 12(#1-#3) are erected from the inner face of the bottom plate 13 of the optical base 1, so that a part of smoke entered from the smoke inlet 12a also flows around the inner bottom face surrounded with the circumferential wall 14.
However, from the beginning, smoke can be smoothly entered in the entire long arc area 13y, so that air with low smoke density does not stay therein when the raised bottom 13a like the short arc area 13x is not provided. Further, the smoke entered along the inner face of the bottom plate 13 in the long arc area 13y runs into the side face 13b of the raised bottom 13a, so that such smoke can be guided to the smoke sensing zone 15.

Air and smoke are hardly entered in the areas 10A, 11A adjacent to the light emitting unit 10 and the light receiving unit 11, respectively in the long arc area 13y shown in Fig. 9A. Therefore, the raised bottom 13a may be formed in the areas 10A, 11A adjacent to the light emitting unit 10 and the light receiving unit 11, respectively like the embodiment in Fig. 8 showing the Embodiment 3.

In each embodiment, the labyrinth walls 12(#1-#3) are integrally provided with the optical base 1, however, the optical base and the labyrinth wall body may be formed separately and may be combined by opposing each other. When the optical base and the labyrinth wall are combined, the labyrinth wall may be erected from the bottom face of the optical base to the upper end of the smoke sensing chamber by abutting the tip end of the labyrinth wall to the inner bottom face of the optical base.

The structure of assembling the smoke detection unit 100 and its internal structure may not be limited to the above-mentioned embodiment and the configuration in the figure. It goes without saying that the present invention can be provided with a heat detection element like a thermistor and can be applied to the smoke sensor 100 with a heat detecting function in addition to that with a smoke detecting function.

## Claims

1. A smoke sensor having a smoke sensing chamber around which a plurality of labyrinth walls are formed in which a light emitting portion and a light receiving portion are provided in such a manner that the light receiving portion is disposed at a place where light from the light emitting portion is not directly received, thereby constituting a smoke sensing zone and a smoke inlet is formed in the labyrinth walls, the detecting sensor being adapted to discriminate a fire by detecting light scattered by smoke which enters the smoke sensing chamber through the smoke inlet;
wherein the labyrinth wall has ;
- a bent portion by bending its portion near the smoke sensing chamber; and
- a smoke guide end directing toward the smoke sensing zone formed at its end of the smoke sensing zone side from the bent portion; and
- wherein at least one of the labyrinth walls provided in an area facing the light receiving portion has an outside light interrupting end whose end directing toward the outward of the smoke sensing chamber is formed as a fan-like shape whose end is broadened.

2. The smoke sensor as set forth in claim 1,
wherein at least one of the labyrinth walls whose smoke guide end faces to the light emitting portion has a smoke guide end of tapered shape.

3. The smoke sensor as set forth in claim 2 or 3,
wherein the labyrinth wall further has at its inner side of the bent portion a projection for interrupting and reflecting outside light.

4. A smoke sensor having a smoke sensing chamber around which a plurality of labyrinth walls are formed in which a light emitting portion and a light receiving portion are provided in such a manner that the light receiving portion is disposed at a place where light from the light emitting portion is not directly received, thereby constituting a smoke sensing zone and a smoke inlet is formed in the labyrinth walls, the detecting sensor being adapted to discriminate a fire by detecting light scattered by smoke which enters the smoke sensing chamber through the smoke inlet,
wherein the smoke sensor comprises:
- an optical base in which the light emitting portion and the light receiving portion are provided;
- labyrinth walls provided in the optical base by which the light emitting portion and the light receiving portion are surrounded;
- a light shielding wall disposed around the center in the smoke sensing chamber, by which light from the light emitting portion directly to the light receiving portion is shielded; and
- a partition member connecting the ends of the labyrinth walls directing toward the smoke sensing zone area with the end of the light shielding wall correspondingly, the labyrinth walls being disposed between the light emitting portion and the light receiving portion.

5. The smoke sensor as set forth in claim 1,
wherein a raised bottom which constitutes a closed zone is further provided in an area between the light emitting portion and the light receiving portion, whereby smoke is prevented from entering the closed zone.

6. The smoke sensor as set forth in claim 4 or 5,
wherein a raised bottom which constitutes a closed zone is further provided in areas adjacent to the light emitting portion and to the light receiving portion, respectively, the areas being opposite to an area between the light emitting portion and the light receiving portion, whereby smoke is prevented from entering the closed zone.

7. A smoke sensor having a smoke sensing chamber around which a plurality of labyrinth walls are formed in which a light emitting portion and a light receiving portion are provided in such a manner that the light receiving portion is disposed at a place where light from the light emitting portion is not directly received, thereby constituting a smoke sensing zone and a smoke inlet is formed in the labyrinth walls, the detecting sensor being adapted to discriminate a fire by detecting light scattered by smoke which enters the smoke sensing chamber through the smoke inlet,
wherein the smoke sensor comprises:
- an optical base in which the light emitting portion and the light receiving portion are provided; and
- labyrinth walls protruding from the optical base so as to surround the light emitting portion and the light receiving portion; wherein
- the optical base has a closed zone constituted by a raised bottom where smoke is prevented from entering in an area not including the smoke sensing zone but including an area between the light emitting portion and the light receiving portion and the labyrinth walls are provided such that they are extended from the raised bottom up to the upper end of the smoke sensing chamber; and
- wherein the labyrinth walls are extended from the bottom of the optical base up to the upper end of the smoke sensing chamber in an area including the smoke sensing zone except the raised bottom.

8. The smoke sensor as set forth in claim 1,
further comprising:
- a speaker, disposed adjacent to the smoke sensing chamber, for fire alarming; and
- an isolation wall with an air vent which communicates a space where the speaker is disposed with the smoke sensing chamber.

9. The smoke sensor as set forth in claim 7 or 8,
wherein the optical base further has a circumferential wall and the smoke inlet is provided above the circumferential wall, and wherein the raised bottom is substantially same in height as a boundary of the circumferential wall.
